## Europäisches Patentamt
## European Patent Office
## Office européen des brevets

(19)

(11) Numéro de publication : **0 096 679**
**B1**

(12)

# FASCICULE DE BREVET EUROPÉEN

(45) Date de publication du fascicule du brevet :
**02.03.88**

(21) Numéro de dépôt : **83870052.4**

(22) Date de dépôt : **02.06.83**

(51) Int. Cl.⁴ : **A 21 C 15/02, B 31 C 1/02**

(54) **Installation d'enroulement et de transfert de biscuits.**

(30) Priorité : **04.06.82 BE 208273**

(43) Date de publication de la demande :
**21.12.83 Bulletin 83/51**

(45) Mention de la délivrance du brevet :
**02.03.88 Bulletin 88/09**

(84) Etats contractants désignés :
**AT CH DE FR GB IT LI LU NL SE**

(56) Documents cités :
**BE-A- 645 021**
**DE-A- 1 922 332**
**DE-B- 1 154 335**
**US-A- 2 134 914**

(73) Titulaire : **N.V. Biscuits Delacre S.A.**
**Mimastraat, 10**
**B-1800 Vilvoorde (BE)**

(72) Inventeur : **Busseniers, Roger**
**Avenue des Jardins 52**
**B-1030 Bruxelles (BE)**
Inventeur : **Deudon, Martial**
**Damsevaart 120**
**B-8310 Sint-Kruis-Brugge (BE)**

(74) Mandataire : **Pieraerts, Jacques et al**
**Bureau Gevers S.A. Rubenslei 2 - Bus 8**
**B-2018 Antwerpen (BE)**

## Description

L'invention concerne une installation réalisant l'enroulement d'une portion de pâte cuite entre un mandrin enrouleur et une courroie appliquée sur environ la moitié de la surface périphérique du mandrin enrouleur et le transfert du biscuit enroulé ainsi formé, biscuit comportant une double épaisseur sur une partie de sa surface, la pâte destinée à la formation du biscuit étant présentée par une plaque déflectrice dans l'espace situé entre ledit mandrin enrouleur et la courroie précitée, ladite installation comportant un support oscillant animé d'un mouvement alternatif dans un plan perpendiculaire à l'axe du mandrin enrouleur précité, ledit support oscillant étant équipé de deux cylindres de guidage sur lesquels circule la courroie précitée et qui sont parallèles au mandrin enrouleur et disposés par rapport à un mandrin enrouleur en position permettant la réception à partir de la plaque déflectrice d'une portion de pâte à enrouler sur ledit mandrin, de manière telle que la courroie est enroulée autour du mandrin sur un arc correspondant à un angle au centre d'environ 180°.

Il est connu de produire des biscuits de forme cylindrique, obtenus par enroulement d'une portion de pâte, entre un mandrin enrouleur et une courroie qui est appliquée de façon intermittente sur une partie du mandrin enrouleur. Un exemple typique d'une telle machine est décrit dans le brevet belge 645 021 au nom de « Les Industries Alimentaires ».

Les machines connues à ce jour, capables de produire de tels biscuits, ont, non seulement, une capacité de production jugée insuffisante, mais, de plus, elles ne sont pas conçues pour permettre le dépôt automatique des biscuits dans des récipients appropriés ; les biscuits tombent sans être réceptionnés de telle sorte qu'un pourcentage élevé de ces biscuits sont brisés ou endommagés, ce qui diminue d'autant le niveau de production de la machine.

Un but de l'invention est de réaliser une installation qui, en plus de son niveau élevé de production, est d'une construction compacte permettant un montage et un démontage extrêmement simplifiés des éléments essentiels qui constituent l'installation.

A cet effet, conformément à l'invention, l'installation comporte une couronne animée de rotation intermittente autour de son axe, une série de mandrins enrouleurs montés à rotation libre à la périphérie de ladite couronne pour former avec celle-ci un barillet et cela de telle sorte que les axes de mandrins enrouleurs précités soient perpendiculaires au plan dans lequel la couronne est amenée à tourner, le support oscillant étant un bras oscillant présentant une extrémité coudée sur laquelle sont montés les deux cylindres de guidage précités, cette extrémité coudée formant entre les cylindres un creux dont le profil est adapté au diamètre du mandrin enrouleur et dont la profondeur, par rapport à ce mandrin en position d'enroulement, est suffisante pour permettre à la courroie précitée de s'enrouler sur au moins la moitié dudit mandrin enrouleur, tandis que l'amplitude du mouvement alternatif du bras oscillant précité, en direction du centre du barillet est suffisamment grande pour permettre le passage des mandrins enrouleurs hors de portée des cylindres de guidage, chaque mandrin enrouleur étant équipé d'un éjecteur.

Selon l'invention également, chaque mandrin enrouleur est, en outre, équipé d'un éjecteur du biscuit enroulé, constitué par une pièce cylindrique capable de glisser sous l'action d'un organe d'éjection le long du mandrin enrouleur pour évacuer le biscuit enroulé, lequel est collecté dans le prolongement du mandrin enrouleur considéré.

D'autres détails et avantages de l'invention ressortiront de la description qui sera donnée ci-après d'une installation permettant l'enroulement et le transfert de biscuits, selon l'invention. Cette description n'est donnée qu'à titre d'exemple et ne limite pas l'invention. Les notations de références se rapportent aux figures ci-jointes.

La figure 1 est une vue latérale de l'installation, le bras oscillant se trouvant dans une position de retrait par rapport à la trajectoire circulaire des mandrins enrouleurs du barillet.

La figure 2 est une vue latérale de l'installation selon l'invention en position d'enroulement d'une portion de pâte sur un mandrin enrouleur.

La figure 3 est une vue de face de l'installation avec coupe et brisure partielles.

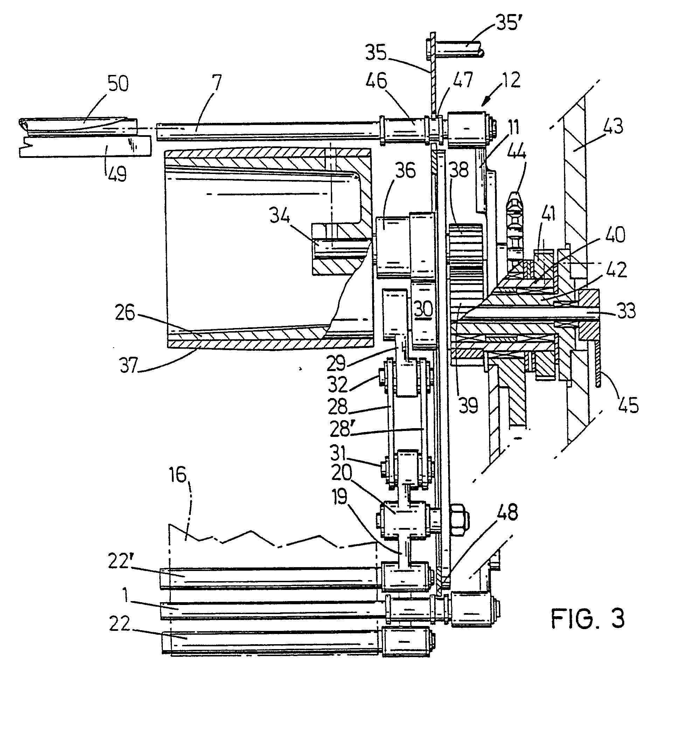

L'installation représentée par ces figures comprend essentiellement un barillet constitué d'une série de mandrins enrouleurs 1 à 10, montés à rotation libre sur une couronne 11 animée d'un mouvement de rotation pas-à-pas, comme on le verra à propos de la description de la figure 3. L'ensemble formé par la couronne 11 et les mandrins enrouleurs 1 à 10, montés perpendiculairement au plan de cette couronne est appelé barillet et porte la référence générale 12.

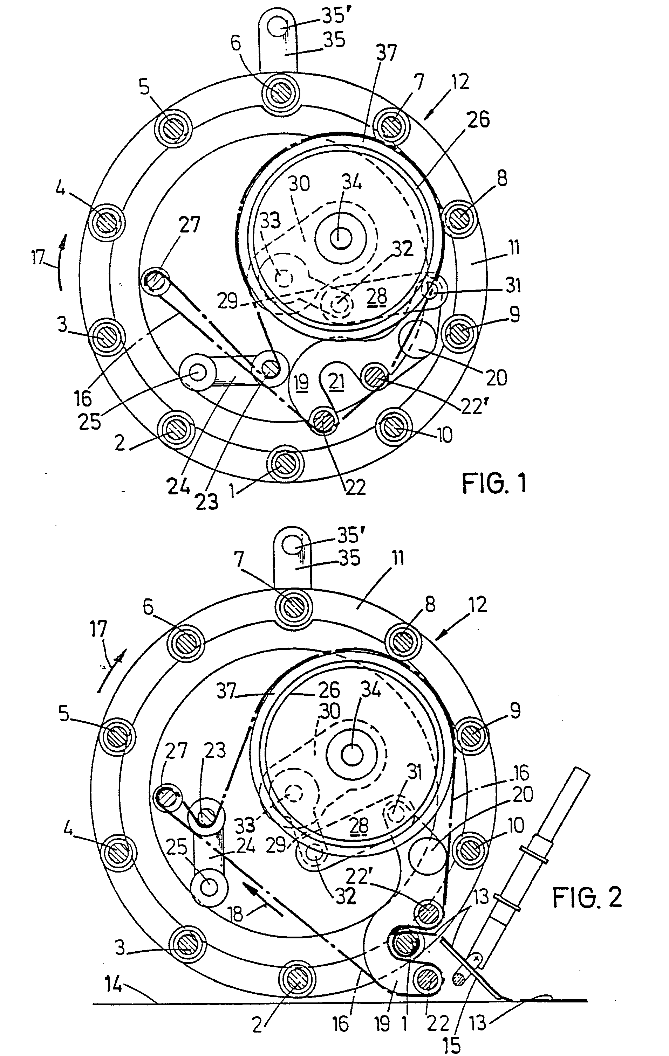

Les mandrins enrouleurs ont une forme cylindrique et les portions de pâte 13 (figure 2) amenées par une bande transporteuse 14 ou un dispositif analogue, parviennent, chacun, sur un des mandrins enrouleurs 1 à 10 par l'intermédiaire d'une plaque déflectrice 15. La pâte cuite mais encore molle a cependant assez de consistance pour atteindre un mandrin enrouleur (figure 2) et être saisie entre ce mandrin et la courroie 16.

A la figure 2, le mandrin enrouleur 1 se trouve en position d'enroulement et, en considérant le sens de rotation du barillet 12 représenté par la flèche 17, on peut supposer que les mandrins enrouleurs 2 à 7 sont chargés d'un cylindre de pâte fraîchement enroulée. L'éjection du cylindre de pâte étant supposé se faire à hauteur du mandrin enrouleur 7, (figure 2), à l'aide de moyens qui seront décrits en se référant à la figure 3. Le sens de déplacement de la courroie 16 est représenté par la flèche 18.

L'enroulement de la pâte autour d'un mandrin enrouleur se fait dans des conditions permettant un rythme de production élevé grâce à la conception du bras oscillant 19 monté à pivotement autour de l'axe 20. Le bras oscillant 19 est représenté en position de retrait à la figure 1 et en position de travail, ou d'enroulement d'un biscuit, à la figure 2.

De part et d'autre d'un creux 21 prévu à l'extrémité du bras oscillant, sont montés, également à rotation libre, deux cylindres de guidage 22 et 22' sur lesquels passe la courroie 16.

En position d'enroulement d'un biscuit (figure 2) les cylindres de guidage 22 et 22' sont disposés à une distance telle du mandrin enrouleur avec lequel ils coopèrent que la portion de pâte entraînée à partir de la plaque déflectrice 15 s'enroule complètement autour du mandrin en question.

La tension de la courroie 16 est réglée par un cylindre tendeur 23 monté sur un bras pivotant 24 qui oscille, autour d'un axe 25. Le cylindre tendeur 23 se situe entre un tambour 26 qui entraîne la courroie 16 et un cylindre de renvoi 27.

Un ressort de rappel, non représenté aux figures, tend à repousser le bras pivotant 24 vers la position représentée à la figure 1, correspondant à la position dite de retrait du bras oscillant 19 par rapport à la trajectoire circulaire des mandrins enrouleurs 1 à 10.

Alors que le tambour 26 est entraîné de manière continue et que le barillet 12 exécute un mouvement pas-à-pas, grâce à un ensemble de moyens représentés à la figure 3, le bras oscillant 19 reçoit son mouvement intermittent autour de l'axe 20 grâce à un jeu de bielles 28-28', une manivelle 29 et une pièce 30.

Les deux bielles 28-28' pivotent autour des axes 31 et 32 tandis qu'une manivelle 29 pivote uniquement autour de l'axe 32. La raison d'être des pièces 30 et 36 est exclusivement d'ordre constructif. La pièce 30 sert en effet de logement d'une part, aux roulements à aiguilles d'un arbre 34 et, d'autre part, de logement à l'arbre 32. La pièce 36 constitue un prolongement de la pièce 30 dans laquelle est logé un second jeu de roulements à aiguilles de l'arbre 34. L'arbre d'entraînement 34 est l'arbre qui entraîne selon un mouvement de rotation continu le tambour 26 entraînant la courroie 16. Le tambour d'entraînement 26 porte une garniture 37 facilitant l'entraînement de la courroie 16.

La rotation continue de l'arbre 34 disposé de manière excentrée par rapport à l'axe géométrique du barillet 12 est assurée par un pignon 38 calé sur une extrémité de l'arbre 34 et cela du côté de la couronne 11 portant les divers mandrins enrouleurs 1 à 10.

Le pignon 38 est lui-même entraîné par un pignon 39 qui fait partie de la bague 40 sur laquelle est fixée une poulie 41 entraînée par une courroie crantée. La courroie crantée est entraînée par un dispositif d'entraînement conventionnel non représenté.

La bague 40 qui porte le pignon 39 et la poulie 41 est montée autour d'un axe creux 42 par l'intermédiaire de roulements à aiguilles. L'axe creux 42 est fixe par rapport au bâti de l'installation schématisée, entre autres, par une tôle 43.

Pour assurer le mouvement pas-à-pas du barillet 12, et d'une manière concrète, de la couronne 11 portant lesdits mandrins enrouleurs, il est fait usage d'un pignon 44 entraîné par une roue à chaîne elle-même entraînée par des moyens non représentés réalisant l'avancement pas-à-pas de la chaîne et du pignon à chaîne 44. Le pignon à chaîne 44 est fixé sur la couronne 11.

Enfin, le mouvement alternatif de l'arbre 33 sur une extrémité duquel est serrée une extrémité de la manivelle 29 est provoqué par le mouvement de balancier imprimé à un levier 45 partiellement représenté à la figure 3. Le levier 45 est animé d'un mouvement de balancier par tout dispositif connu utilisable à cet effet.

Chaque mandrin enrouleur porte un éjecteur 46 formé par un cylindre creux capable de coulisser le long du corps cylindrique du mandrin. Grâce à une gorge 47 de cet éjecteur dans laquelle pénètre le rebord périphérique d'un élément de guidage 48, l'éjecteur 46 est maintenu dans la position en retrait dans laquelle il est représenté à la figure 3.

Lorsque, au cours de la rotation du barillet, un mandrin enrouleur vient occuper, par exemple, la position du mandrin 7 (figure 2) l'éjecteur 46 peut être déplacé par un organe éjecteur 35, en forme de doigt, monté sur une tige 35', pénétrant dans la gorge 47 et animé d'un mouvement de translation le long de l'axe du mandrin enrouleur lorsque celui-ci est venu se placer en position d'éjection. Au cours de la rotation du barillet 12, la gorge 47 de l'éjecteur 46 vient se placer dans le même plan que l'organe d'éjection 35 qui se trouve, en position de repos, dans le même plan que l'élément de guidage 48. Pour permettre ce mouvement de translation de l'éjecteur 46, l'élément de guidage 48, qui appartient aux éléments fixes de l'installation, est interrompu pour permettre à l'éjecteur 46 d'être libéré de l'élément de guidage en question.

Les biscuits déplacés le long du mandrin enrouleur par l'éjecteur 46 sont recueillis dans le prolongement de ce mandrin par tout moyen d'emballage ou de transfert se déplaçant à une cadence qui correspond à la cadence à laquelle se présente successivement les mandrins du barillet 12 au cours de la rotation pas-à-pas de celui-ci.

A la figure 3, des moyens de transfert et d'emballage sont représentés schématiquement par la référence 49 et un biscuit par la référence 50.

On peut, pour augmenter la cadence d'alimentation de ces moyens d'emballage ou de transfert, disposer une seconde installation du même type que celle qui vient d'être décrite, symétriquement par rapport à celle-ci. Ceci revient à disposer ces installations par rapport à une bande convoyeuse commune ou tout autre moyen de transfert, de telle sorte que les biscuits soient éjectés des mandrins enrouleurs de part et d'autre des moyens d'emballage ou de transfert précités. Si l'on considère que le mandrin enrouleur 7 de la figure 2 se trouve en position d'éjection d'un biscuit enroulé on peut disposer la seconde installation de telle sorte que les biscuits soient éjectés par cette installation environ dans le prolongement de l'axe géométrique du mandrin enrouleur 8 représenté à la figure 2.

De la description qui vient d'en être donnée, on peut déduire que l'installation selon l'invention est d'une compacité qui a été particulièrement étudiée, alors que les moyens qui provoquent l'enroulement des biscuits et leur déplacement jusqu'au point d'éjection sont d'une très grande simplicité, ce qui permet une robustesse de construction particulièrement favorable à un rythme de production très élevé.

### Revendications

1. Installation réalisant l'enroulement d'une portion (13) de pâte cuite entre un mandrin enrouleur et une courroie (16) appliquée sur environ la moitié de la surface périphérique du mandrin enrouleur et le transfert du biscuit enroulé (50) ainsi formé, biscuit comportant une double épaisseur sur une partie de la surface, la pâte destinée à la formation du biscuit (50), étant présentée par une plaque déflectrice (15) dans l'espace situé entre ledit mandrin enrouleur et la courroie précitée, ladite installation comportant un support oscillant (19) animé d'un mouvement alternatif dans un plan perpendiculaire à l'axe du mandrin enrouleur précité, ledit support oscillant (19) étant équipé de deux cylindres de guidage (22, 22') sur lesquels circule la courroie (16) précitée et qui sont parallèles au mandrin enrouleur et disposés par rapport à un mandrin enrouleur en position permettant la réception à partir de la plaque déflectrice (15) d'une portion (13) de pâte à enrouler sur ledit mandrin, de manière telle que la courroie (16) est enroulée autour du mandrin sur un arc correspondant à un angle au centre d'environ 180°, installation caractérisée en ce qu'elle comporte une couronne (11) animée de rotation intermittente autour de son axe, une série de mandrins enrouleurs (1 à 10) montés à rotation libre à la périphérie de ladite couronne (11) pour former avec celle-ci un barillet (12) et cela de telle sorte que les axes de mandrins enrouleurs précités (1 à 10) soient perpendiculaires au plan dans lequel la couronne est amenée à tourner, et en ce que le support oscillant (19) est un bras oscillant (19) présentant une extrémité coudée sur laquelle sont montés les deux cylindres de guidage précités (22 et 22'), cette extrémité coudée formant entre les cylindres un creux (21) dont le profil est adapté au diamètre du mandrin enrouleur et dont la profondeur, par rapport à ce mandrin en position d'enroulement, est suffisante pour permettre à la courroie précitée (16) de s'enrouler sur au moins la moitié dudit mandrin enrouleur, tandis que l'amplitude du mouvement alternatif du bras oscillant précités 19), en direction du centre du barillet (12) est suffisamment grande pour permettre le passage des mandrins enrouleurs (1 à 10) hors de portée des cylindres de guidage (22 et 22'), chaque mandrin enrouleur (1 à 10) étant équipé d'un éjecteur (46).

2. Installation selon la revendication 1, caractérisée en ce que l'éjecteur précitée (46), destiné à extraire le biscuit enroulé (50) du mandrin enrouleur, est constitué par une pièce cylindrique capable de glisser sous l'action d'un organe d'éjection (35) le long du mandrin enrouleur pour évacuer le biscuit enroulé, lequel est collecté dans le prolongement du mandrin enrouleur considéré.

3. Installation selon l'une quelconque des revendications 1-2, caractérisée en ce que le bras oscillant précité (19) pivote autour d'un axe (20) situé entre l'extrémité coudée précitée et une extrémité libre de ce même bras oscillant (19) et articulé sur au moins une bielle 28 qui lui communique son mouvement alternatif.

4. Installation selon l'une quelconque des revendications 1 à 3, caractérisée en ce que la courroie (16) précitée est entraînée sur les cylindres de guidage (22 et 22') du bras oscillant précité (19), ainsi que sur au moins un cylindre de renvoi (27) et un cylindre tendeur (23) à l'aide d'un tambour (26) à mouvement de rotation continu monté à l'intérieur du barillet (12) précité.

5. Installation selon la revendication 4, caractérisée en ce que l'arbre d'entraînement (34) du tambour précité (26) est disposé de manière excentrée par rapport à l'axe géométrique du barillet précité (12).

6. Installation selon l'une quelconque des revendications 1 à 5, caractérisée en ce que la couronne précitée (11) porte en son centre un pignon à entraînement intermittent (44).

7. Installation selon la revendication 6, caractérisée en ce que le pignon précité (44) est un pignon à chaîne.

8. Installation selon l'une quelconque des revendications 5 à 7, caractérisée en ce que l'entraînement de l'axe (34) du tambour (26) se fait par l'intermédiaire de deux pignons (38) et (39) engrènant entre eux, le dernier de ces pignons, étant calé sur une bague (40) qui porte à son extrémité opposée une poulie (41) coopérant avec une courroie crantée entraînée en continu.

9. Installation selon l'une quelconque · des revendications 3 à 8, caractérisée en ce que les bielles (28-28'), qui impriment un mouvement alternatif au bras oscillant (19), sont articulées à une manivelle (29) dont une des extrémités est calée sur un arbre (33), lui-même animé d'un mouvement alternatif qui lui est imprimé par un levier (45).

### Claims

1. Apparatus performing the coiling of a cooked dough portion (13) between a coiling spindle and a belt (16) applied over about half the coiling spindle circumferential surface, and the transferring of the resulting coiled wafer (50), which wafer comprises a double thickness over part of the surface thereof, the dough for forming the wafer (50) being fed by a deflecting plate (15) to that space lying between said coiling spindle and belt, said apparatus comprising a swinging support (19) whereto an alternating motion is imparted in a plane at right angle to the axis of said coiling spindle, said swinging support (19) being fitted with two guide rollers (22, 22') whereover said belt (16) runs and which lie parallel to the coiling spindle and in such a position relative to a coiling spindle as to allow receiving from the deflecting plate (15), a dough portion (13) to be coiled over said spindle, in such a way that the belt (16) is wraped about the spindle over an arc corresponding to an angle in the center about 180°, apparatus characterized in that is comprises a ring (11) whereto an intermittent rotation is imparted about the axis thereof, a series of coiling spindles (1 to 10) so mounted as to be freely rotatable on the circumference of said ring (11) to form therewith a turret (12) and this in such a way that the axes of said coiling spindles (1 to 10) lie at right angle to the plane wherein the ring is being revolved, and in that the swinging support (19) is a swinging arm (19) with a cranked end whereon both said guide rollers (22 and 22') are mounted, said cranked end forming between the rollers, a recess (21) the section of which is adapted to the coiling spindle diameter and the depth of which relative to said spindle in coiling position, is deep enough to let said belt (16) wrap itself over at least half said coiling spindle, while the alternating motion amplitude of said swinging arm (19) in the direction of the turret center is large enough to let the coiling spindles (1 to 10) pass out of reach of the guide rollers (22 and 22'), each coiling spindle (1 to 10) being fitted with an ejector (46).

2. Apparatus as defined in claim 1, characterized in that said ejector (46) for discharging the coiled wafer (50) from the coiling spindle, is comprised of a cylinder-like part which is slidable along the coiling spindle to discharge the coiled wafer, which is collected in the extension of the coiling spindle under consideration.

3. Apparatus as defined in either one of claims 1-2, characterized in that said swinging arm (19) swings about a shaft (20) lying between said cranked end and a free end of said same swinging arm (19) and hinged to at least one connecting rod 28 which imparts the alternating motion thereto.

4. Apparatus as defined in anyone of claims 1 to 3, characterized in that said belt (16) is driven over the guide rollers (22 and 22') of said swinging arm (19) as well as over at least one counter-roller (27) and a tensioning roller (23) by means of a continuously-rotating drum (26) which is mounted inside said turret (12).

5. Apparatus as defined in claim 4, characterized in that the driving shaft (34) for said drum (26) is arranged eccentrically relative to the geometrical axis of said turret (12).

6. Apparatus as defined in anyone of claims 1 to 5, characterized in that said ring (11) bears in the center thereof an intermittently-driven pinion (44).

7. Apparatus as defined in claim 6, characterized in that said pinion (44) is a chain sprocket.

8. Apparatus as defined in anyone of claims 5 to 7, characterized in that the drive to the shaft (34) of the drum (26) occurs through two pinions (38 and 39) meshing together, the latter one from said pinions being fast to collar (40) which bears on the opposite end thereof, a pulley (41) cooperating with a continuously-driven ribbed belt.

9. Apparatus as defined in anyone of claims 3 to 8, characterized in that connecting rods (28-28') which impart to the swinging arm (19), the alternating motion thereof, are hinged to a crank (29) one end of which is fast to a shaft (33) whereto an alternative motion is imparted in turn by a lever (45).

**Patentansprüche**

1. Vorrichtung zum Wickeln eines gebackenen Teigteils (13) zwischen einem Wickeldorn und einem Gurt (16), der sich über engefähr die Hälfte der Umfangsoberfläche des Wickeldorns erstreckt, und zur Übergabe des so gebildeten gewickeltes Biskuits (50), wobei der Biskuit eine doppelte Dicke über zinen Teil seiner Oberfläche aufweist, wobei der Teig, der zur Bildung des Biskuits (50) bestimmt ist, durch eine Ablenkplatte (15) in den Raum übergeben wird, der sich zwischen dem Wickeldorn und dem Gurt befindet, wobei die Vorrichtung einen schwingenden Träger (19) umfaßt, der zu einer Umkehrbewegung in einer Ebene angeregt wird, die senkrecht zur Achse des Wickeldorns ist, wobei der schwingende Träger (19) mit zwei Führungszylindern (22, 22') versehen ist, über welche der Gurt (16) umläuft und die parallel zum Wikkeldorn sowie bezüglich eines Wickeldorns in einer Position angeordnet sind, welche die Annahme eines Teigteils (13) von der Ablenkplatte (15) zum Wickeln auf dem Dorn gestattet, und zwar in der Weise, daß der Gurt (16) über einen Bogen um den Dorn geschlungen ist, welcher einem Winkel im Zentrum von ungefähr 180° entspricht, wobei die Vorrichtung dadurch gekennzeichnet ist, daß sie einen Kreisring (11) umfaßt, der zu einer intermittierenden Drehung um seine Achse angeregt wird, eine Reihe von Wickeldornen (1 bis 10), die zu einer freien Drehung auf dem Umfang des Kreisrings (11) angebracht sind, so daß sie mit diesem eine Trommel (12) bilden, und zwar in der Weise, daß die Achsen der Wickeldorne (1 bis 10) senkrecht zu der Ebene sind, in welcher der Kreisring zum Drehen angeregt wird, und dadurch, daß der schwingende Träger (19) ein Schwingarm (19) ist, der ein begendörmiges Ende aufweist, auf dem die beiden Führungszylinder (22, 22') angebracht sind, wobei dieses bogenförmige Ende zwischen den Zylindern eine Ausnehmung (21) bildet, deren Profil dem Durchmesser des Wickeldorns angepaßt ist und deren Tiefe bezüglich des Dorns in der Wickelposition ausreicht, um es dem Gurt (16) zu ermöglichen, den Wickeldorn über wenigstens dessen Hälfte zu umschlingen, während die Amplitude der Umkehrbewegung des Schwingarms (19) in der Richtung des Zentrums der Trommel (12) genügend größ ist, um den Durchgang der Wickeldorne (1-10) außerhalb des Bereichs der Führungszylinder (22 und 22') zu gestatten, wobei jeder Wickeldorn (1 bis 10) mit einem Ausstoßer (46) versehen ist.

2. Vorrichtung nach Anspruch 1, dadurch gekennzeichnet, daß der Ausstoßer (46), der dazu bestimmt, ist, den gewickelten Biskuit (50) von dem Wickeldorn herauszubringen, von einem zylindrischen Teil gebildet ist, das unter der Wirkung eines Ausstoßorgans (35) längs des Wickeldorns gleiten kann, um den gewickelten Biskuit abzuführen, welcher in der Verlängerung des in Betracht stehenden Wickeldorns aufgefangen wird.

3. Vorrichtung nach irgendeinem der Ansprüche 1 bis 2, dadurch gekennzeichnet, daß sich der Schwingarm (19) um eine zwischen dem erwähnten bogenförmigen Ende und einem freien Ende dieses gleichen Schwingarms (19) befindliche Achse (20) verschwenkt und auf wenigstens einem Zwischenglied (28) gelenkig gelagert ist, welches ihm seine Umkehrbewegung mitteilt.

4. Vorrichtung nach irgendeinem der Ansprüche 1 bis 3, dadurch gekennzeichnet, daß der Gurt (16) über die Führungszylinder (22 und 22') des Schwingarms (19) angetrieben wird, wie auch über wenigstens einen Umlenkzylinder (27) und einen Spannzylinder (23), und zwar mit Hilfe einer eine kontinuierliche Rotationsbewegung ausführenden anderen Trommel (26), die im Inneren der vorher erwähnten einen Trommel (12) angebracht ist.

5. Vorrichtung nach Anspruch 4, dadurch gekennzeichnet, daß die Antriebswelle (34) der anderen Trommel (26) in exzentrischer Weise bezüglich der geometrischen Achse der einen Trommel (12) angeordnet ist.

6. Vorrichtung nach irgendeinem der Ansprüche 1 bis 5, dadurch gekennzeichnet, daß der Kreisring (11) in seinem Zentrum ein Antriebsrad (44) zum intermittierenden Antrieb trägt.

7. Vorrichtung nach Anspruch 6, dadurch gekennzeichnet, daß das Antriebsrad (44) ein Antriebskettenrad ist.

8. Vorrichtung nach irgendeinem der Ansprüche 5 bis 7, dadurch gekennzeichnet, daß der Antrieb der Achse (34) der anderen Trommel (26) über zwei Antriebsräder (38) und (39) erfolgt, die miteinander kämmen, wobei das letztere dieser Antriebsräder auf einem Ring (40) festgekeilt ist, der auf seinem entgegengesetzten Ende eine Riemenscheibe (41) trägt, die mit einem kontinuierlich angetriebenen gerippten Riemen zusammenwirkt.

9. Vorrichtung nach irgendeinem der Ansprüche 3 bis 8, dadurch gekennzeichnet, daß Zwischenglieder (28 bis 28'), welche den Schwingarm (19) zu seiner Umkehrbewegung antreiben, gelenkig an einer Kurbel (29) gelagert sind, von welcher eine Ende auf einer Welle (33) festgekeilt ist, die ihrerseits zu einer Umkehrbewegung angeregt wird, zu welcher sie durch einen Hebel (45) angetrieben wird.

0 096 679

FIG. 1

FIG. 2

FIG. 3